# FASCICULE DE BREVET EUROPEEN

(11) **EP 2 681 431 B1**
(45) Date de publication et mention de la délivrance du brevet: **29.06.2016**
(21) Numéro de dépôt: 12709677.4
(22) Date de dépôt: 17.02.2012
(51) Int. Cl.: F02D 41/02, F02D 41/06, F02D 41/14

(54) **METHODE DE COMMANDE D'UN MOTEUR A COMBUSTION EN MODE MARGINAL DE FONCTIONNEMENT, POUR LIMITER L'EMISSION DE FUMEES**
ABGASWERTE BEGRENZUNGSREGELUNG VERFAHREN ZUR VERBRENNUNGSMOTORS
EXHAUST GAS EMISSION LIMITING CONTROL METHOD FOR INTERNAL COMBUSTION ENGINE

(30) Priorité: 02.03.2011 FR 1151674
(43) Date de publication de la demande: 08.01.2014
(73) Titulaire: Peugeot Citroën Automobiles SA, 78140 Vélizy Villacoublay (FR)
(72) Inventeur: WALTER, Christian, F-78180 Montigny Le Bretonneux (FR)
(74) Mandataire: Renous Chan, Véronique
(86) Numéro de dépôt international: PCT/FR2012/050347
(87) Numéro de publication internationale: WO 2012/117181

(56) Documents cités:
- EP-A1- 0 890 723
- EP-A1- 1 978 219
- FR-A1- 2 831 208
- US-A- 6 112 716
- US-A1- 2005 252 198
- US-A1- 2007 068 485

## Description

L'invention est du domaine des modalités de commande des moteurs à combustion au regard du traitement des gaz d'échappement qu'ils produisent. Elle a pour objet une méthode de commande des moteurs à combustion en mode marginal de fonctionnement, tel qu'à froid, au ralenti et/ou en altitude, pour limiter les rejets polluants émis par les gaz d'échappement.

Dans le domaine automobile, un moteur thermique équipant un véhicule est producteur de gaz d'échappement qui sont rejetés à l'air libre par l'intermédiaire d'une ligne d'échappement. Le fonctionnement du moteur à combustion est placé sous la dépendance de moyens de commande, pour notamment réguler la quantité de carburant et de comburant admis dans le moteur à combustion selon les conditions de roulage du véhicule. Les gaz d'échappement comportent des polluants qu'il est nécessaire de traiter préalablement à leur rejet dans l'atmosphère, et la ligne d'échappement est équipée à cet effet de divers moyens de traitement mécaniques et/ou physicochimiques des gaz d'échappement. De tels moyens de traitement sont par exemple un catalyseur d'oxydation (CO), un système de réduction catalytique sélective (SCRS) ou un filtre à particules (FAP), qui sont implantés et/ou intégrés sur la ligne d'échappement. Les moyens de traitement sont définis selon des modalités de fonctionnement du moteur à combustion et d'utilisation du véhicule, et sont adaptés selon des modes courants de roulage du véhicule sur route. Pour déterminer la position sur la ligne d'échappement, les capacités et les performances des moyens de traitement, il est notamment pris en compte la température des gaz d'échappement considérée dans la zone de traversée des divers moyens de traitement.

Se pose le problème du traitement des gaz d'échappement en mode marginal de fonctionnement du moteur à combustion. De tels modes marginaux de fonctionnement sont définis comme induisant une quantité de gaz imbrulés dans les gaz d'échappement qui est au-delà d'un seuil admis. Ce seuil est déterminé en fonction d'une inaptitude des moyens de traitement équipant la ligne d'échappement à traiter les gaz d'échappement en raison de leur température insuffisante, tels qu'en mode de démarrage et/ou en mode de ralenti du moteur à combustion, et/ou encore en mode de roulage du véhicule par grand froid et/ou en altitude sous de basses pressions atmosphériques. Les gaz imbrûlés peuvent se condenser sur les parois de la ligne d'échappement sans être épurés par les moyens de traitement qui sont inopérants du fait de la faible température des gaz d'échappement, et génèrent des rejets polluants qui sont à éviter au regard de la règlementation et/ou d'un désagrément visuel générant un sentiment défavorable auprès de la clientèle. Plus particulièrement, des hydrocarbures et de l'eau s'accumulent dans la ligne d'échappement et sont susceptibles d'être réémis brutalement sous forme de fumées et d'odeurs lorsque les moyens de traitement sont portés ultérieurement à température par des gaz d'échappement plus chauds.

Pour résoudre ce problème, il est connu de repérer un fonctionnement du moteur à combustion en mode marginal, pour intervenir spécifiquement sur ses modalités de mise en oeuvre. Une surveillance du fonctionnement du moteur thermique et/ou d'accessoires dont il est équipé permet de repérer la nécessité d'intervenir spécifiquement sur la température des gaz d'échappement pour tendre à limiter la quantité de gaz imbrûlés acheminée dans la ligne d'échappement. Lorsqu'un seuil prédéfini d'élévation en température des gaz d'échappement est atteint, l'intervention spécifique sur les modalités de fonctionnement du moteur à combustion est interrompue. Par exemple selon EP0890723 (RENAULT), il est proposé un ensemble de stratégies de pilotage du moteur, lesquelles comprennent plusieurs phases dont la transition se fait en fonction d'une variable représentative de l'énergie dégagée par la combustion du mélange air-carburant depuis le démarrage du moteur, et variant en fonction de la température d'eau du moteur mémorisée au démarrage. Selon un autre exemple, EP2133542 (YANMAR CO LTD) et US6152107 (CATERPILLAR INC), il est proposé en mode de démarrage du moteur thermique de modifier les modalités courantes d'injection en carburant, voire l'alimentation en comburant du moteur thermique, pour réduire la quantité d'hydrocarbures dans la ligne d'échappement. Par exemple encore selon WO0058613 (DETROIT DIESEL CORP.), il est proposé en mode de ralenti du moteur thermique d'imposer une charge supplémentaire au moteur thermique pour faire monter les gaz d'échappement en température.

Les modalités mises en oeuvre pour limiter la quantité de gaz imbrûlés admis dans la ligne d'échappement en mode marginal de fonctionnement du moteur à combustion, méritent d'être améliorées. Une interdiction spécifique d'injection de carburant est une solution dont les effets en soi peuvent être peu ou pas opérants, notamment lorsque le véhicule roule en altitude et/ou par grand froid. Une telle solution d'interdiction d'injection est insatisfaisante compte tenu qu'il est délicat, voire impossible, d'interdire totalement les injections de carburant au risque d'affecter la conduite du véhicule et/ou l'exploitation d'accessoires dont il est équipé. Plus particulièrement lorsque le véhicule progresse en altitude, sous de basses pressions atmosphériques, les interdictions d'injection de carburant doivent logiquement être plus importantes pour éviter les émissions d'hydrocarbures imbrûlés. Cependant, une augmentation de telles interdictions porte atteinte au fonctionnement du véhicule, notamment lors des transitions entre les interdictions et les autorisations d'injection de carburant.

Au regard de l'ensemble des modes marginaux de fonctionnement d'un moteur à combustion, qui induisent une admission de gaz imbrûlés dans la ligne d'échappement au-delà d'un seuil toléré, il apparait opportun d'intervenir sur la température des gaz d'échappement et de parfaire les modalités d'une telle intervention.

Il est notamment visé par la présente invention de proposer une méthode de commande des moteurs à combustion en mode marginal de fonctionnement, tel qu'à froid, au ralenti et/ou en altitude par exemple, qui permette de limiter les rejets visibles et éventuellement brutaux de polluants et de vapeur d'eau en sortie de la ligne d'échappement, et qui évite un passage d'hydrocarbures imbrûlés non traités dans l'atmosphère. Il est plus particulièrement visé par la présente invention de proposer une telle méthode selon laquelle une hausse de température des gaz d'échappement est commandée à partir d'une détection d'un fonctionnement du moteur à combustion en mode marginal.

La méthode de la présente invention est une méthode de commande du fonctionnement d'un moteur à combustion équipant un véhicule automobile. Cette méthode est plus spécifiquement une méthode de réduction des émissions de gaz imbrûlés par une ligne d'échappement équipant le moteur à combustion, lorsqu'il est exploité en mode marginal de fonctionnement.

La méthode exploite des interventions spécifiques sur les modalités de mise en oeuvre du moteur à combustion et/ou d'accessoires dont il est équipé. Il est compris que les modalités de commande du fonctionnement du moteur à combustion sont susceptibles d'intervenir non seulement sur la mise en oeuvre du moteur à combustion lui-même, mais aussi sur des accessoires l'équipant et participant de sa mise en oeuvre, tels que des pompes, des vannes, des organes électriques de commande et/ou de puissance comme un alterno-démarreur ou tout autre organe que comprend un groupe motopropulseur équipant un véhicule automobile et comprenant un moteur à combustion muni d'accessoires nécessaires et/ou utiles à son fonctionnement et à son exploitation. Il est compris par mode marginal un mode de fonctionnement du moteur à combustion qui induit une émission par le moteur à combustion d'une quantité de gaz imbrûlés au-delà d'un seuil prédéfini toléré, notamment au regard de l'exploitation de moyens de traitement mécaniques et/ou physicochimiques des gaz d'échappement qui équipent la ligne d'échappement. De tels modes marginaux de fonctionnement correspondent notamment à un démarrage à froid du moteur à combustion, à son fonctionnement au ralenti lorsque le véhicule est immobile ou circule à faible vitesse et en conséquence lorsque les charges normalement appliquées au moteur à combustion sont considérées comme faibles, ou encore à une évolution du véhicule en altitude, sous de basses pressions atmosphériques.

La méthode de la présente invention comprend une opération de détection d'une mise en oeuvre du moteur à combustion en mode marginal de fonctionnement, qui provoque une opération de commande d'une élévation forcée en température des gaz d'échappement produits par le moteur à combustion.

Selon la présente invention, une telle méthode est principalement reconnaissable en ce que l'opération d'élévation forcée en température des gaz d'échappement est effectuée par séquences de commande périodiques d'élévation forcée de la température des gaz d'échappement. La fréquence et les durées individuelles de ces séquences de commande sont placées sous la dépendance de paramètres prédéfinis de conditions de fonctionnement du moteur à combustion. Les séquences de commande périodiques sont activées quand la température des gaz d'échappement est inférieure à une température prédéfinie, par exemple de l'ordre de 150° ou de l'ordre de 200°C ou entre ces deux températures.

L'invention s'intéresse plus particulièrement aux moteurs à combustion interne de type diesel. En effet, dans l'invention, on vise à éviter l'accumulation d'hydrocarbures imbrulés dans la ligne d'échappement du moteur en augmentant faiblement et périodiquement la température des gaz d'échappement afin, notamment, de réamorcer le ou les catalyseurs adaptés aux moteurs diesel. Il ne s'agit donc pas d'atteindre des températures très élevées, au-delà de 200 ou 300°C par exemple. La solution de l'invention est adaptée aux moteurs diesel, dont les gaz d'échappement sont significativement plus bas en température que les gaz d'échappement de moteurs à essence, températures basses spécifiques au diesel qui peuvent conduire au désamorçage des moyens de traitement de dépollution des lignes d'échappement, bien après les phases de mise en action et de démarrage à froid conventionnels que rencontrent aussi bien des moteurs à essence que les moteurs diesel.

L'opération d'élévation forcée en température des gaz d'échappement est composée d'une pluralité d'opérations de commande élémentaires, qui provoquent individuellement une élévation forcée en température des gaz d'échappement en étant espacées par une absence de commande d'intervention spécifique sur l'élévation en température des gaz d'échappement. Ces opérations élémentaires constituent les dites séquences de commande, dont la fréquence d'intervention et la durée sont susceptibles d'être constantes mais qui sont de préférence adaptées selon les conditions de roulage du véhicule et/ou de fonctionnement du moteur à combustion.

Les paramètres prédéfinis régulant les séquences de commande sont relatifs à des facteurs indifféremment propres au fonctionnement du moteur à combustion et/ou notamment à des facteurs relatifs à l'environnement extérieur du moteur à combustion, et plus particulièrement au véhicule. Les facteurs propres au fonctionnement du moteur à combustion sont par exemple sa température de fonctionnement susceptible d'être évaluée à partir d'une mesure de la température d'un liquide mis en oeuvre par des moyens de refroidissement équipant le véhicule, d'une évaluation des émissions de rejets polluants qu'il génère et notamment de la quantité de carburant injecté et/ou de gaz imbrûlés évacués hors du moteur à combustion, la température des gaz d'échappement admis dans la ligne d'échappement, et/ou encore une requête et/ou une production de couple généré par le moteur à combustion. Les facteurs relatifs à l'environnement extérieur du moteur à combustion sont notamment la température de l'air ambiant extérieur au véhicule et/ou la pression atmosphérique.

Les paramètres prédéfinis régulant les séquences de commande sont sujets à des variations de valeur qui sont évaluées en cas de détection d'une mise en oeuvre du moteur à combustion en mode marginal de fonctionnement, et qui sont comparées à des seuils prédéfinis déterminant la fréquence et les durées individuelles des séquences de commande d'élévation forcée en température des gaz d'échappement. L'évaluation des variations de valeur relatives à chacun des dits paramètres prédéfinis est susceptible d'être opérée indifféremment en continu ou par période de durée prédéterminée indifféremment régulières ou variables selon des valeurs précédemment évaluées.

Plus particulièrement, la fréquence et les durées individuelles des séquences de commande sont de préférence régulées en fonction d'au moins un paramètre relevant des conditions climatiques environnant le véhicule, comprenant l'un au moins des paramètres relatifs à la température de l'air extérieur au véhicule et/ou à la pression atmosphérique.

La détermination de la pression atmosphérique est susceptible d'être obtenue par une mesure directe et/ou par calcul à partir d'une information relative à l'altitude fournie par un système de positionnement satellitaire, tel qu'un GPS (d'après l'acronyme anglais Global Positionning System) ou analogue.

Plus particulièrement encore, la fréquence et les durées individuelles des séquences de commande sont encore susceptibles d'être régulées en fonction d'au moins un paramètre relevant des conditions de fonctionnement propres au moteur à combustion.

Selon une forme de mise en oeuvre de la méthode, l'une quelconque au moins de la fréquence et/ou de la durée individuelle des séquences de commande sont constantes au regard de l'évolution de la valeur évaluée de l'un au moins des paramètres prédéfinis. Isolément ou en combinaison avec de telles dispositions prises au regard de l'un au moins des paramètres prédéfinis, l'une quelconque au moins de la fréquence et/ou de la durée individuelle des séquences de commande sont susceptibles d'être variables au regard de l'évolution de la valeur évaluée de l'un au moins des paramètres prédéfinis. La fréquence et/ou la durée des séquences de commande sont susceptibles d'être constantes au regard d'un paramètre prédéfini, et d'être variables au regard d'un autre paramètre prédéfini.

Par exemple au regard des paramètres prédéfinis relevant des conditions climatiques environnant le véhicule, la durée individuelle et/ou la fréquence des séquences de commande sont susceptibles d'être constantes et/ou variables pour l'un au moins de ces paramètres. Plus particulièrement, la durée individuelle des séquences de commande est susceptible d'être constante pour des fréquences variables ; inversement la fréquence des séquences de commande est susceptible d'être constante pour des durées individuelles variables. Plus particulièrement encore, la durée individuelle des séquences de commande est susceptible d'être constante ou variable pour l'un des paramètres prédéfinis, température de l'air extérieur ou pression atmosphérique, et d'être inversement constante ou variable pour un autre paramètre prédéfini. Idéalement, il est préféré de faire varier la fréquence et la durée individuelle des séquences de commande pour chacun des paramètres prédéfinis, et notamment pour chacun des paramètres relevant de la température de l'air extérieur et de la pression atmosphérique.

L'activation des séquences de commande est susceptible d'être préétablie, mais est de préférence placée sous la dépendance d'une requête de couple à fournir par le moteur à combustion qui est inférieure à un seuil prédéfini en fonction du mode de roulage du véhicule.

L'activation des séquences de commande est notamment placée sous la dépendance d'une requête en température des gaz d'échappement qui est inférieure à une température prédéfinie d'activation du fonctionnement d'au moins un quelconque moyen de traitement des gaz d'échappement équipant la ligne d'échappement, catalyseur d'oxydation notamment. Plus particulièrement, il doit être compris que les séquences de commande sont interrompues dès lors que les gaz d'échappement sont susceptibles d'être traités par des moyens de traitement dédiés équipant la ligne d'échappement pour réduire significativement la quantité de gaz. De tels moyens de traitement sont réputées être amorcés dès lors qu'un seuil de température est atteint. A titre indicatif, la température considérée comme faible d'interruption des séquences de commande est de l'ordre de 150°C, température à laquelle l'efficacité d'un catalyseur d'oxydation (CO) équipant la ligne d'échappement est réputée performante. Cette température est susceptible d'évoluer en fonction de l'état de vieillissement des moyens de traitement, et un ajustement des modalités de mises en oeuvre des séquences de commande est susceptible d'être opéré selon cet état de vieillissement. On remarquera en cela que la méthode proposée par la présente invention se distingue d'autres méthodes connues visant à élever la température des gaz d'échappement à hautes températures, de l'ordre de 400°C à 650°, pour régénérer des moyens de traitement des gaz d'échappement équipant la ligne d'échappement. La détermination de la température dans la zone des divers moyens de traitement est susceptible d'être obtenue directement par mesure au moyen d'un capteur, et/ou d'être obtenue par déduction à partir de mesures et de modèles de détermination intégrés dans des moyens de calcul des moyens de commande. Dans le cas où la température des gaz d'échappement est mesurée, on peut tirer bénéfice de la conversion des hydrocarbures stockés dans les éléments du système de post traitement afin de réduire la fréquence d'activation de la procédure d'élévation de la température des gaz d'échappement ;
Selon une variante, les séquences de commande sont susceptibles d'être interrompues selon des variables préétablies.

A titre d'exemple, l'élévation forcée en température des gaz d'échappement est générée à partir de l'une quelconque au moins des opérations commandées suivantes :
- de dégradation de la combustion produite par le moteur à combustion,
- d'augmentation de la charge requise du moteur à combustion à partir d'une activation du fonctionnement d'organes consommateurs d'énergie équipant le véhicule, énergie électrique notamment,
- de réduction du refroidissement du moteur à combustion à partir d'une commande de régulation du fonctionnement de moyens dédiés à ce refroidissement équipant le moteur à combustion.

La méthode de l'invention est susceptible d'être mise en oeuvre en complément d'une ou de plusieurs dispositions visant à réduire la quantité de gaz imbrûlés acheminés dans la ligne d'échappement. Par exemple, l'opération d'élévation forcée en température des gaz d'échappement est susceptible d'être commandée en complément d'une opération de régulation de la commande d'injection en carburant admis dans un circuit de combustion équipant le moteur à combustion.

Des exemples de mise en oeuvre d'une méthode de la présente invention vont être décrits en relation avec les figures des planches annexées, dans lesquelles :
- La fig.1 est un graphique illustrant un profil d'évolution thermique courante de gaz d'échappement produits par un moteur à combustion équipant un véhicule.
- La fig.2 est un graphique illustrant un profil d'évolution thermique de gaz d'échappement produits par un moteur à combustion équipant un véhicule analogue au graphique de la fig.1, cette évolution étant corrigée selon un exemple de mise en oeuvre d'une méthode de la présente invention.
- Les fig.3 à fig.6 sont des tableaux illustrant des modalités de mise en oeuvre d'une méthode de la présente invention selon des exemples respectifs d'exécution.

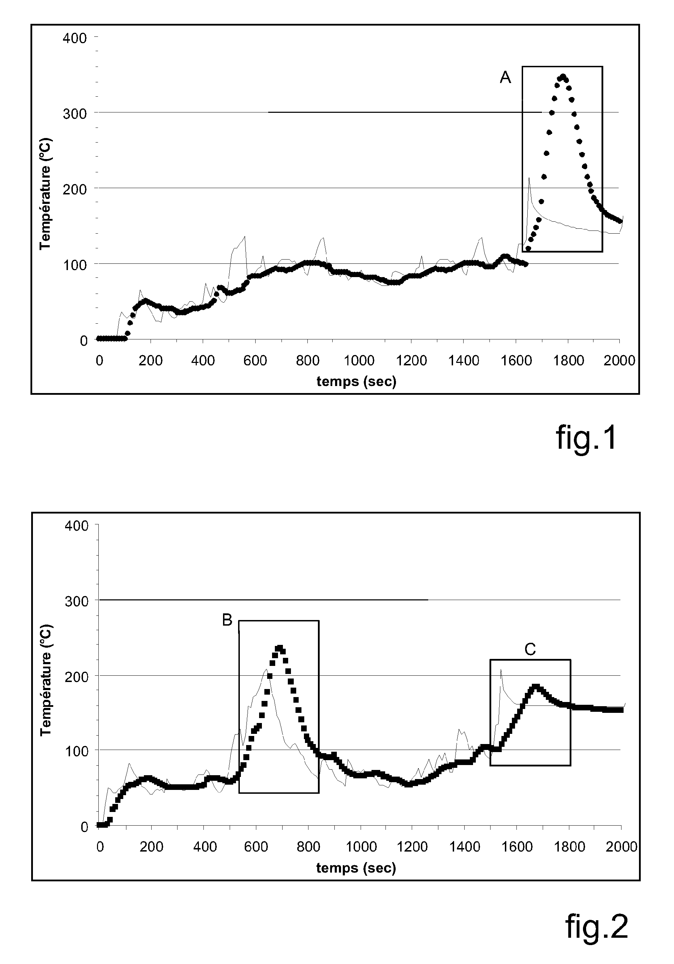

Les graphiques représentés sur les fig.1 et fig.2, illustrent des exemples d'évolution du comportement thermique de gaz d'échappement produits par un moteur à combustion équipant un véhicule. Ces gaz d'échappement sont conduits vers une ligne d'échappement équipant le moteur à combustion, pour leur évacuation à l'air libre après traitement de réduction des composants polluants qu'ils comportent. Le traitement des gaz d'échappement est réalisé par des moyens de traitement mécaniques et/ou physicochimiques qui équipent la ligne d'échappement, dont notamment un catalyseur d'oxydation (CO). La température à laquelle un tel catalyseur d'oxydation est réputé être efficace est de l'ordre de 150°C environ. Les courbes représentées sur les graphiques illustrent l'évolution dans le temps du comportement thermique de gaz d'échappement, le temps étant exprimé en secondes (sec) en abscisse et la température des gaz d'échappement étant exprimée en degrés Celsius (°C) en ordonnée. Chaque graphique comporte deux courbes représentant des profils thermiques des gaz d'échappement, respectivement considérés en amont du catalyseur d'oxydation pour la courbe représentée en trait fin et en aval du catalyseur d'oxydation pour la courbe représentée en trait épais, suivant le sens de circulation des gaz.

Sur la fig.1, un profil courant d'évolution thermique des gaz d'échappement est représenté. Ce profil courant correspond à une évolution du comportement thermique des gaz d'échappement en l'absence d'une mise en oeuvre d'un procédé de la présente invention. Jusqu'à environ 1600 secondes à compter du démarrage du moteur thermique et de l'émission de gaz d'échappement, des hydrocarbures et de l'eau sont susceptibles de s'accumuler sur les parois des différents composants de la ligne d'échappement. De tels composants sont notamment différents moyens de traitement dont elle est équipée, tels que par exemple le catalyseur d'oxydation (CO), un filtre à particules (FAP) catalysé ou non, un catalyseur que comprend un système de réduction catalytique sélective (SRCS), ou encore d'autres composants de la ligne d'échappement tels que des tubes, un ou plusieurs silencieux ou une canule. De faibles écarts de température entre l'amont et l'aval du catalyseur d'oxydation révèlent l'inertie thermique de ce catalyseur d'oxydation. Un accroissement de la sollicitation du moteur à combustion vers 1600 secondes par exemple, induit une élévation de température des gaz d'échappement, tel que représenté dans le cadre A, qui induit un amorçage du catalyseur d'oxydation. La combustion brutale et éventuellement partielle des hydrocarbures stockés dans le catalyseur d'oxydation induit la désorption d'hydrocarbures et d'eau stockés dans les différents composants de la ligne d'échappement, et provoque un dégagement de fumées et d'odeurs.

Sur la fig.2, un profil analogue au profil d'évolution thermique des gaz d'échappement représenté sur la fig.1 est illustré. Cependant contrairement au profil représenté sur la fig.1, le profil représenté sur la fig.2 représente l'évolution thermique des gaz d'échappement soumis à la mise en oeuvre d'une méthode de la présente invention. Par exemple, une commande d'échauffement forcé des gaz d'échappement à environ 500 secondes à compter du démarrage du moteur thermique et de l'émission de gaz d'échappement, tel que représenté dans le cadre B, permet de brûler une partie des hydrocarbures préalablement à une accélération du régime du moteur à combustion intervenant vers 1500 secondes par exemple, tel qu'illustré dans le cadre C. Le stockage excessif d'hydrocarbures imbrûlés dans la ligne d'échappement est évité dans une phase d'évolution thermique des gaz d'échappement qui sans cela est inférieure à 150°C, température à laquelle le catalyseur d'oxydation est couramment amorcé. Les quantités d'hydrocarbures et d'eau à l'intérieur de la ligne d'échappement et l'échauffement des gaz d'échappement dans la phase d'accélération du cadre C étant moindres que selon le profil thermique illustré sur la fig.1, le dit dégagement de fumées et d'odeurs est évité.

Selon un aspect de la méthode de l'invention, il est proposé d'intervenir spécifiquement sur la température des gaz d'échappement en cas de détection d'un fonctionnement du moteur à combustion en mode marginal. Cette intervention spécifique correspond à une commande d'élévation forcée de la température des gaz d'échappement lorsqu'un mode marginal de fonctionnement du moteur à combustion est repéré. Cette commande d'élévation forcée de la température des gaz d'échappement est notamment opérée jusqu'à ce que les gaz d'échappement soient portés à température à partir du fonctionnement courant du moteur à combustion, à au moins une température de consigne de l'ordre de celle d'amorçage du catalyseur d'oxydation notamment. Selon la méthode de l'invention, il est proposé d'interdire une commande d'intervention continue sur la température des gaz d'échappement, en générant une telle commande à partir d'une pluralité de commandes élémentaires correspondantes à des séquences de commande. La mise en oeuvre périodique des séquences de commande permet de ne brûler que de petites quantités de gaz à chacune des séquences, en évitant néanmoins des dégagements significatifs et indésirables d'hydrocarbures et d'eau qui sont stockés dans la ligne d'échappement, notamment en aval ou dans le catalyseur d'oxydation. Le catalyseur d'oxydation est maintenu plus longtemps à une température à laquelle il est apte à brûler instantanément les émissions de gaz imbrûlés produits par le moteur à combustion en mode marginal de fonctionnement. Une telle intervention périodique à partir des séquences de commande d'élévation forcée de la température des gaz d'échappement permet d'éviter de tels dégagements sans affecter les conditions de roulage et/ou le confort de conduite du véhicule. Une montée rapide du moteur à combustion en température lors d'un démarrage à froid permet de réduire les pertes liées notamment à la viscosité de l'huile à basse température. L'obtention d'un confort thermique rapide du véhicule est favorisé par l'exploitation précoce d'une installation de ventilation, de chauffage et/ou de climatisation dont il est équipé et qui est apte à procurer un confort thermique à l'intérieur de l'habitacle du véhicule, et/ou des fonctions de désembuage et de dégivrage favorisant une mise à disposition rapide du véhicule par grand froid.

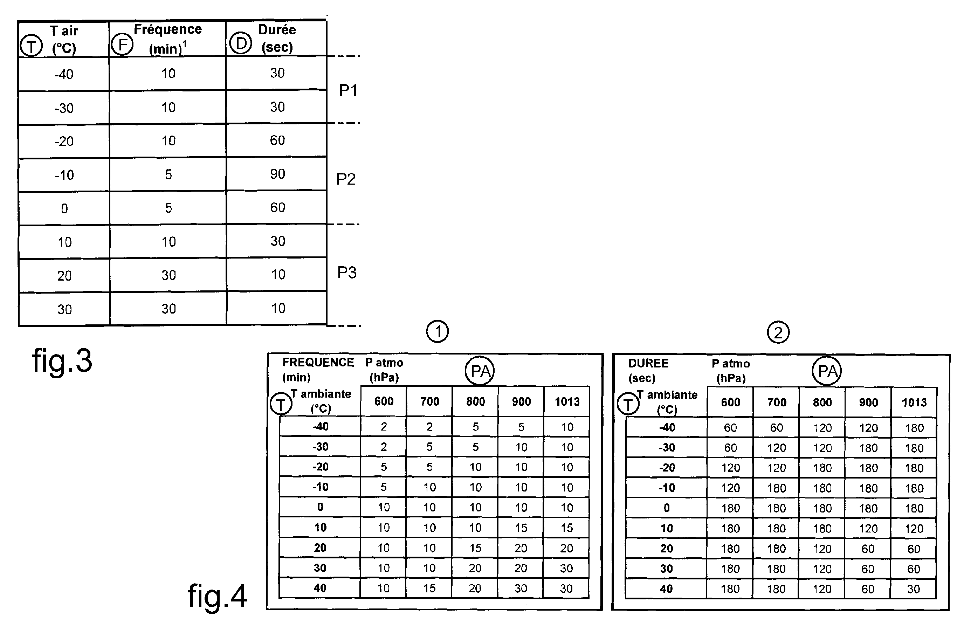

Sur les fig.3 à fig.6, différentes stratégies de mise en oeuvre d'une méthode proposée par la présente invention sont illustrées pour exemple, sous forme de tableaux indiquant les conditions d'exécution des séquences de commande. Selon ces exemples de mise en oeuvre de la méthode, des valeurs relatives à la fréquence et la durée des séquences de commande sont indiquées en fonction de la température de l'air extérieur environnant le véhicule et/ou en fonction de la pression atmosphérique. La température de l'air extérieur et la pression atmosphérique sont par exemple fournis à des moyens de commande équipant le véhicule par des organes appropriés, tels que de mesure ou de réception d'informations distantes.

Sur l'exemple illustré sur la fig.3, la colonne T indique différents seuils de température de l'air extérieur en degré Celsius (°C). Les colonnes F et D indiquent respectivement pour chacune des températures mentionnées dans la colonne T, respectivement la fréquence en minutes (min) et la durée en secondes (sec) des séquences de commande.

Sur les exemples illustrés sur les fig.4 à fig.6, les tableaux 1 et les tableaux 2 représentent respectivement les fréquences en minutes (min) et les durées en secondes (sec) des séquences de commande, conjointement en fonction des différents seuils de température de l'air extérieur indiqués dans les colonnes T en degré Celsius (°C) et des différents seuils de pression atmosphérique indiqués dans les colonnes PA en hecto Pascal (hPa).

Les valeurs mentionnées sur les fig.3 à fig.6 de fréquences et de durées, sont données à titre indicatif et sont susceptibles d'être pondérées en fonction de la puissance du moteur thermique, de l'organisation du groupe de motorisation et/ou des accessoires équipant le véhicule et/ou de la configuration de la ligne d'échappement et notamment de l'organisation des moyens de traitement dont elle est équipée.

Sur la fig.3, la méthode est mise en oeuvre sous condition qu'une requête de couple à fournir par le moteur à combustion soit inférieure à un seuil prédéfini et paramétrable en fonction du véhicule et des conditions de roulage. L'activation des séquences de commande est susceptible d'intervenir dès le démarrage à froid du véhicule, et/ou postérieurement à ce démarrage selon les modes marginaux de fonctionnement induisant la mise en oeuvre des séquences de commande. Sur une plage P1 de températures extérieures inférieures à moins 20°C, l'huile de lubrification du moteur à combustion est très visqueuse. Une activation partielle ou restreinte des séquences de commande est de préférence opérée pour ne pas perturber outre mesure les modalités de roulage du véhicule, voire de mise en oeuvre d'accessoires et/ou de fonctionnement du moteur à combustion dont il est équipé. Sur une plage P2 de températures extérieures comprises entre moins 20°C et plus 10°C, la situation au regard des imbrûlés dans la ligne d'échappement est plus critique, en raison d'un risque accru d'émissions de gaz imbrûlés dégradées par les basses températures et d'un potentiel de condensation dans la ligne d'échappement élevé. Au regard de la plage P1 de températures, les séquences de commande sont plus fréquentes et leur durée plus longue pour la plage P2 de températures. Sur une plage P3 de températures extérieures supérieures à 10°C, les conditions de combustion induisent une limitation des risques d'accumulation d'hydrocarbures imbrûlés dans la ligne d'échappement, sauf en cas d'un maintien prolongé au ralenti du moteur à combustion. Au regard des plages P1 et P2 de températures, les séquences de commande sont moins fréquentes et leur durée individuelle moins longue pour la plage P3 de température.

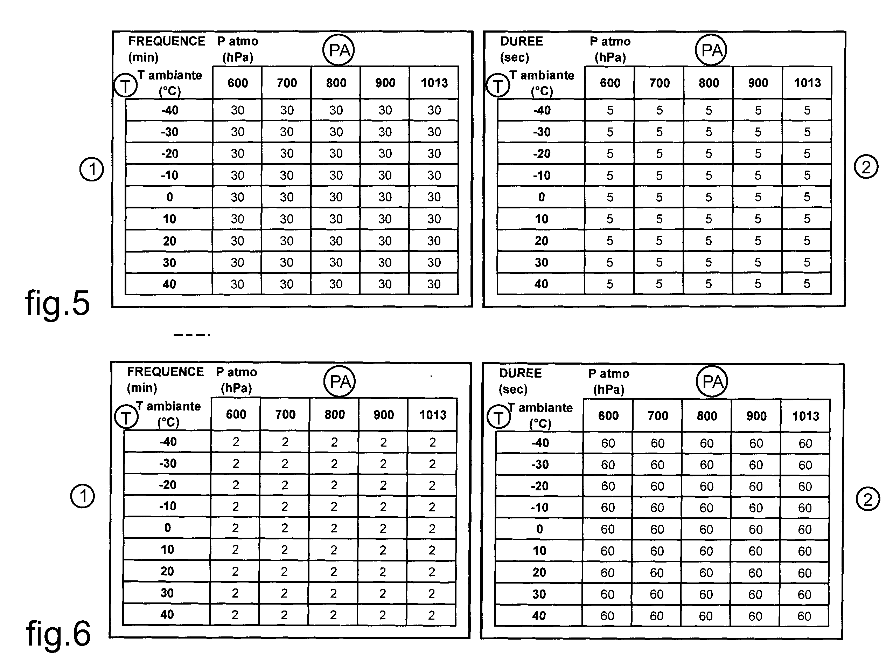

La fig.4 est un exemple de mise en oeuvre d'une méthode de l'invention, selon des modalités préférées d'activation des séquences de commande. De telles modalités préférées sont notamment choisies intermédiaires entre les modalités extrêmes d'activation des séquences de commande qui sont respectivement représentées sur les fig.5 et fig.6.

Au vu des tableaux représentés sur les fig.3 à fig.6, on remarque que l'opération d'élévation forcée en température des gaz d'échappement est effectuée séquentiellement, la durée individuelle et/ou la fréquence des séquences de commande étant placées sous la dépendance d'au moins un paramètre de conditions climatiques environnant le véhicule. Les séquences de commande sont susceptibles d'être régulées en fonction d'au moins la température de l'air extérieur au véhicule et/ou de la pression atmosphérique. Les séquences de commande sont susceptibles d'être constantes en fréquence et en durée, ou encore et de préférence d'être variables en fréquence et/ou en durée, en fonction d'au moins un paramètre de conditions climatiques environnant le véhicule et plus particulièrement en fonction de la température extérieure et/ou de la pression atmosphérique. De telles variations de fréquence et de durée des séquences de commande procurent une élévation en température des gaz d'échappement qui est adaptée aux besoins au regard du passage de gaz imbrûlés dans la ligne d'échappement et des risques induits de dégagements brutaux de fumées et d'odeurs.

D'autres avantages d'une opération de commande d'élévation forcée en température des gaz d'échappement effectuée par séquences de commande périodiques est de satisfaire au résultat recherché de limiter la circulation dans la ligne d'échappement de gaz imbrûlés en conséquence d'un fonctionnement en mode marginal du moteur à combustion, en évitant une consommation conséquente en carburant pour effectuer cette opération et en préservant des composants réputés fragiles et/ou consommables du groupe motopropulseur, tels que des bougies d'allumage dont il est équipé par exemple. Par ailleurs, les instabilités et le bruit de la combustion du carburant sont réduits. Les conditions d'activation des processus de régénération des moyens de traitement dont est équipée la ligne d'échappement en sont facilitées.

## Revendications

1. Méthode de commande du fonctionnement d'un moteur à combustion équipant un véhicule automobile, pour réduire des émissions de gaz imbrûlés par une ligne d'échappement équipant le moteur à combustion lorsqu'il est exploité en mode marginal de fonctionnement, mode marginal qui est défini comme induisant une quantité de gaz imbrûlés dans les gaz d'échappement qui est au-delà d'un seuil admis, cette méthode comprenant une opération de détection d'une mise en oeuvre du moteur à combustion en mode marginal de fonctionnement et qui, en cas de détection d'un fonctionnement du moteur en mode marginal, provoque une opération de commande d'une élévation forcée en température des gaz d'échappement produits par le moteur à combustion, **caractérisée en ce que** l'opération d'élévation forcée en température des gaz d'échappement est effectuée par séquences de commande périodiques qui sont activées quand la température des gaz d'échappement est inférieure à une température prédéfinie, séquences dont la fréquence et les durées individuelles sont fonction de paramètres prédéfinis de conditions de fonctionnement du moteur à combustion.

2. Méthode selon la revendication précédente, **caractérisée en ce que** la température prédéfinie est de l'ordre de 150 à 200°C.

3. Méthode selon l'une des revendications 1 ou 2, **caractérisée en ce que** la fréquence et les durées individuelles des séquences de commande sont régulées en fonction d'au moins un paramètre relevant des conditions climatiques environnant le véhicule, comprenant l'un au moins des paramètres relatifs à la température de l'air extérieur au véhicule et/ou à la pression atmosphérique.

4. Méthode selon l'une quelconque des revendications 1 à 3, **caractérisée en ce que** la fréquence et les durées individuelles des séquences de commande sont régulées en fonction d'au moins un paramètre relevant des conditions de fonctionnement propres au moteur à combustion.

5. Méthode selon l'une quelconque des revendications 1 à 4, **caractérisée en ce que** l'une quelconque au moins de la fréquence et/ou de la durée individuelle des séquences de commande sont constantes au regard de l'évolution de la valeur évaluée de l'un au moins des paramètres prédéfinis.

6. Méthode selon l'une quelconque des revendications 1 à 5, **caractérisée en ce que** l'une quelconque au moins de la fréquence et/ou de la durée individuelle des séquences de commande sont variables au regard de l'évolution de la valeur évaluée de l'un au moins des paramètres prédéfinis.

7. Méthode selon l'une quelconque des revendications 1 à 6, **caractérisée en ce qu'**une évaluation des variations de valeur relatives à chacun des dits paramètres prédéfinis est opérée en continu ou par période d'une durée prédéterminée régulière ou variable selon des valeurs précédemment évaluées.

8. Méthode selon l'une quelconque des revendications précédentes, **caractérisée en ce que** l'activation des séquences de commande est placée sous la dépendance d'une requête de couple à fournir par le moteur à combustion qui est inférieure à un seuil prédéfini en fonction du mode de roulage du véhicule.

9. Méthode selon l'une quelconque des revendications précédentes, **caractérisée en ce que** l'activation des séquences de commande est fonction d'une requête en température des gaz d'échappement qui est inférieure à une température prédéfinie d'activation du fonctionnement d'au moins un quelconque moyen de traitement des gaz d'échappement équipant la ligne d'échappement.

10. Méthode selon l'une quelconque des revendications précédentes, **caractérisée en ce que** l'élévation forcée en température des gaz d'échappement est générée à partir de l'une quelconque au moins des opérations commandées suivantes :
• de dégradation de la combustion produite par le moteur à combustion,
• d'augmentation de la charge requise du moteur à combustion à partir d'une activation du fonctionnement d'organes consommateurs d'énergie équipant le véhicule,
• de réduction du refroidissement du moteur à combustion à partir d'une commande de régulation du fonctionnement de moyens dédiés à ce refroidissement équipant le moteur à combustion.

11. Méthode selon l'une quelconque des revendications précédentes, **caractérisée en ce que** l'opération d'élévation forcée en température des gaz d'échappement est commandée en complément d'une opération de régulation de la commande d'injection en carburant admis dans un circuit de combustion équipant le moteur à combustion.

## Patentansprüche

1. Verfahren zum Steuern des Betriebs einer Brennkraftmaschine, die ein Kraftfahrzeug ausstattet, um Emissionen unverbrannter Gase durch eine Abgasanlage, die die Brennkraftmaschine ausstattet, zu verringern, wenn sie im Grenzbetriebsmodus betrieben wird, wobei der Grenzbetriebsmodus als eine Menge unverbrannter Gase in die Abgase, die über einem zulässigen Schwellenwert liegt, induzierend definiert ist, wobei dieses Verfahren einen Vorgang eines Umsetzens der Brennkraftmaschine im Grenzbetriebsmodus umfasst, und das im Fall des Erfassens eines Betriebs des Motors im Grenzbetriebsmodus einen Steuervorgang einer forcierten Temperaturerhöhung der Abgase, die durch die Brennkraftmaschine erzeugt werden, verursacht, **dadurch gekennzeichnet, dass** der Vorgang der forcierten Temperaturerhöhung der Abgase in periodischen Steuersequenzen ausgeführt wird, die aktiviert werden, wenn die Temperatur der Abgase niedriger ist als eine vordefinierte Temperatur, wobei die Frequenz und die einzelnen Dauern der Sequenzen von vordefinierten Parametern von Betriebszuständen der Brennkraftmaschine abhängen.

2. Verfahren nach dem vorhergehenden Anspruch, **dadurch gekennzeichnet, dass** die vordefinierte Temperatur in der Größenordnung von 150 bis 200 °C liegt.

3. Verfahren nach einem der Ansprüche 1 oder 2, **dadurch gekennzeichnet, dass** die Frequenz und die einzelnen Dauern der Steuersequenzen in Abhängigkeit von mindestens einem Parameter geregelt sind, der von Klimabedingungen um das Fahrzeug abhängt, der mindestens einen der Parameter in Zusammenhang mit der Lufttemperatur außerhalb des Fahrzeugs und/oder dem Luftdruck umfasst.

4. Verfahren nach einem der Ansprüche 1 bis 3, **dadurch gekennzeichnet, dass** die Frequenz und die einzelnen Dauern der Steuersequenzen in Abhängigkeit von mindestens einem Parameter geregelt sind, der von Betriebsbedingungen, die der Brennkraftmaschine eigen sind, abhängt.

5. Verfahren nach einem der Ansprüche 1 bis 4, **dadurch gekennzeichnet, dass** die Frequenz und/oder die einzelne Dauer der Steuersequenzen angesichts der Entwicklung des geschätzten Werts mindestens eines der vordefinierten Parameter konstant sind.

6. Verfahren nach einem der Ansprüche 1 bis 5, **dadurch gekennzeichnet, dass** die Frequenz und/oder die einzelne Dauer der Steuersequenzen angesichts der Entwicklung des geschätzten Werts mindestens eines der vordefinierten Parameter variabel sind.

7. Verfahren nach einem der Ansprüche 1 bis 6, **dadurch gekennzeichnet, dass** eine Schätzung der Variationen der relativen Werte jedes der vordefinierten Parameter laufend oder periodisch mit einer vorbestimmten regelmäßigen oder variablen Dauer gemäß zuvor geschätzten Werten ausgeführt wird.

8. Verfahren nach einem der vorhergehenden Ansprüche, **dadurch gekennzeichnet, dass** die Aktivierung der Steuersequenzen in Abhängigkeit von einer Drehmomentanfrage, die von der Brennkraftmaschine zu liefern ist, die niedriger als ein in Abhängigkeit von dem Fahrmodus des Fahrzeugs vordefinierter Schwellenwert ist, platziert ist.

9. Verfahren nach einem der vorhergehenden Ansprüche, **dadurch gekennzeichnet, dass** die Aktivierung der Steuersequenzen von einer Temperaturanfrage der Abgase, die niedriger ist als eine vordefinierte Temperatur zum Aktivieren des Betriebs mindestens eines der Abgasbehandlungsmittel, das die Abgasanlage ausstattet, abhängt.

10. Verfahren nach einem der vorhergehenden Ansprüche, **dadurch gekennzeichnet, dass** die forcierte Temperaturerhöhung der Abgase ausgehend von mindestens einer der folgenden gesteuerten Operationen erzeugt wird:
• Verschlechterung der Verbrennung, die von der Brennkraftmaschine erzeugt wird,
• Erhöhung der Last, die von der Brennkraftmaschine gefordert wird, ausgehend von einer Aktivierung des Betriebs Energie verbrauchender Organe, die das Fahrzeug ausstatten,
• Verringerung der Kühlung der Brennkraftmaschine ausgehend von einer Regelungssteuerung des Betriebs der dieser Kühlung dedizierten Mittel, die die Brennkraftmaschine ausstatten.

11. Verfahren nach einem der vorhergehenden Ansprüche, **dadurch gekennzeichnet, dass** der Betrieb zur forcierten Temperaturerhöhung der Abgase zusätzlich zu einem Regelbetrieb der Einspritzsteuerung von Kraftstoff, der in einen Verbrennungskreislauf, der die Brennkraftmaschine ausstattet, eingelassen wird, gesteuert wird.

## Claims

1. A method for controlling the operation of an internal combustion engine equipping a motor vehicle, to reduce burnt gas emissions by an exhaust line equipping the internal combustion engine when it is operated in marginal operating mode, which marginal mode is defined as inducing a quantity of burnt gases in the exhaust gases which is beyond an accepted threshold, this method including an operation of detection of an implementation of the internal combustion engine in marginal operating mode and which, in the case of detection of a functioning of the engine in marginal mode, brings about a control operation of a forced increase in temperature of the exhaust gases produced by the internal combustion engine, **characterized in that** the operation of a forced increase in temperature of the exhaust gases is carried out by periodic control sequences which are activated when the temperature of the exhaust gases is less than a predefined temperature, the frequency and the individual durations of which sequences are a function of predefined parameters of operation conditions of the internal combustion engine.

2. The method according to the preceding claim, **characterized in that** the predefined temperature is in the order of 150 to 200°C.

3. The method according to one of Claims 1 or 2, **characterized in that** the frequency and the individual durations of the control sequences are regulated as a function of at least one parameter recording climatic conditions surrounding the vehicle, including at least one of the parameters relating to the temperature of the air exterior to the vehicle and/or to the atmospheric pressure.

4. The method according to any one of Claims 1 to 3, **characterized in that** the frequency and the individual durations of the control sequences are regulated as a function of at least one parameter recording operating conditions specific to the internal combustion engine.

5. The method according to any one of Claims 1 to 4, **characterized in that** any one at least of the frequency and/or of the individual duration of the control sequences are constant with regard to the development of the evaluated value of at least one of the predefined parameters.

6. The method according to any one of Claims 1 to 5, **characterized in that** any one at least of the frequency and/or of the individual duration of the control sequences are variable with regard to the development of the evaluated value of at least one of the predefined parameters.

7. The method according to any one of Claims 1 to 6, **characterized in that** an evaluation of the variations in value relating to each of the said predefined values is operated continuously or per period of a regular or variable predetermined duration according to previously evaluated values.

8. The method according to any one of the preceding claims, **characterized in that** the activation of the control sequences is placed under the dependency of a torque request to be provided by the internal combustion engine which is less than a predefined threshold as a function of the running mode of the vehicle.

9. The method according to any one of the preceding claims, **characterized in that** the activation of the control sequences is a function of a temperature request of the exhaust gases which is less than a predefined temperature of activation of the functioning of at least any one processing means of the exhaust gases equipping the exhaust line.

10. The method according to any one of the preceding claims, **characterized in that** the forced increase in temperature of the exhaust gases is generated from any one at least of the following controlled operations:
• of degradation of the combustion produced by the internal combustion engine,
• of increase of the required charge of the internal combustion engine from an activation of the functioning of energy-consuming elements equipping the vehicle,
• of reduction of the cooling of the internal combustion engine from a control for regulation of the functioning of means dedicated to this cooling equipping the internal combustion engine.

11. The method according to any one of the preceding claims, **characterized in that** the operation of forced increase in temperature of the exhaust gases is controlled in addition to a regulation operation of the control of injection of fuel admitted in a combustion circuit equipping the internal combustion engine.
